(19) Europäisches Patentamt
European Patent Office
Office européen des brevets

(11) **EP 4 583 562 A1**

(12) **EUROPEAN PATENT APPLICATION**
published in accordance with Art. 153(4) EPC

(43) Date of publication:
**09.07.2025 Bulletin 2025/28**

(51) International Patent Classification (IPC):
**H04W 24/02** (2009.01)

(21) Application number: **23870263.3**

(52) Cooperative Patent Classification (CPC):
**H04W 24/02; H04W 24/08; H04W 88/08**

(22) Date of filing: **08.09.2023**

(86) International application number:
**PCT/CN2023/117750**

(87) International publication number:
**WO 2024/067024 (04.04.2024 Gazette 2024/14)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **30.09.2022 CN 202211215342**

(71) Applicant: **Huawei Technologies Co., Ltd.
Shenzhen, Guangdong 518129 (CN)**

(72) Inventors:
• **GENG, Haijian**
  **Shenzhen, Guangdong 518129 (CN)**
• **HUANG, Zhiliang**
  **Shenzhen, Guangdong 518129 (CN)**
• **RAO, Qiong**
  **Shenzhen, Guangdong 518129 (CN)**
• **GONG, Zhengwei**
  **Shenzhen, Guangdong 518129 (CN)**

(74) Representative: **Gill Jennings & Every LLP
The Broadgate Tower
20 Primrose Street
London EC2A 2ES (GB)**

(54) **ANTENNA CONFIGURATION METHOD AND APPARATUS, AND DEVICE**

(57) This application provides a method for configuring an antenna, an apparatus, and a device. **In the** method, an access network device receives first measurement data from a terminal device, and adjusts a parameter of the antenna from a first antenna parameter combination to a second antenna parameter combination based on the first measurement data. According to the foregoing method, the access network device may adjust the antenna parameter based on measurement data fed back by the terminal device in real time. This helps different antenna parameters adapt to different service features in real time, and helps improve receiving performance of a device in a network (for example, improve reference signal received power of the terminal device), thereby improving spectral efficiency and throughput of the network.

```
          ┌──────────────────────────────────────┐  ┌─ S101
          │ An access network device receives first measurement
          │        data from a terminal device    │
          └──────────────────┬───────────────────┘
                             │
                             ▼
          ┌──────────────────────────────────────┐  ┌─ S102
          │ The access network device adjusts a parameter of an
          │ antenna from a first antenna parameter combination
          │ to a second antenna parameter combination based on
          │        the first measurement data     │
          └──────────────────────────────────────┘
```

FIG. 3

EP 4 583 562 A1

## Description

This application claims priority to Chinese Patent Application No. 202211215342.6, filed with the China National Intellectual Property Administration on September 30, 2022 and entitled "METHOD FOR CONFIGURING ANTENNA, APPARATUS, AND DEVICE", which is incorporated herein by reference in its entirety.

TECHNICAL FIELD

This application relates to the field of communication technologies, and in particular, to a method for configuring an antenna, an apparatus, and a device.

BACKGROUND

In a wireless communication system, a multi-band coordination (multi-band coordination, MBC) technology can implement feature complementarity between spectrums. For example, the MBC technology can implement inter-band carrier aggregation (inter-band carrier aggregation) or implement multi-band coordination between long term evolution (long term evolution, LTE) and new radio (new radio, NR) in a non-standalone (none stand-alone, NSA) scenario, thereby implementing mutual complementarity between performance coverage and capacity. In a multi-band coordination system, based on a correspondence relationship between an antenna structure and a center frequency, there are two antenna structures: multi-frequency homogeneity and multi-frequency heterogeneity. The multi-frequency homogeneity means that antenna parameters of multiple center frequencies are the same; because coverage characteristics of different center frequencies are the same due to the multi-frequency homogeneity, interference of other center frequencies remains a same interference trend once one center frequency experiences strong interference, bringing poor coverage independence among the multiple center frequencies. The multi-frequency heterogeneity means that antenna parameters of multiple center frequencies are different. However, currently, parameters of a multi-frequency heterogeneous antenna are designed based on a preset network model and/or existing engineering parameters. For example, if a service feature in an actual system is greatly different from that in a preset network model, receiving performance of a device in a network is poor, resulting in degradation of coverage performance of the network, spectral efficiency reduction, and throughput decrease.

SUMMARY

This application provides a method for configuring an antenna, an apparatus, and a device. According to the method, a parameter of a multi-frequency heterogeneous antenna may be adjusted based on measurement data fed back by a terminal device, thereby helping improve spectral efficiency and throughput of a network.

According to a first aspect, this application provides a method for configuring an antenna, an apparatus, and a device. The method may be applied to an access network device. The access network device includes a first center frequency and a second center frequency, and multiple center frequencies correspond to multiple sets of antennas. Specifically, the method is performed by the access network device, may be performed by a component (for example, a processor, a chip, or a chip system) of the access network device, or may be implemented by a logical module or software that can implement all or some functions of the access network device. The access network device receives first measurement data from a terminal device, and adjusts the parameters of the antennas (for example, the multiple sets of antennas corresponding to the multiple center frequencies) from a first antenna parameter combination to a second antenna parameter combination based on the first measurement data. The first antenna parameter combination includes a first antenna parameter of the first center frequency and a first antenna parameter of the second center frequency, and the second antenna parameter combination includes a second antenna parameter of the first center frequency and a second antenna parameter of the second center frequency.

According to the method, the access network device may adjust the antenna parameter based on measurement data fed back by the terminal device in real time. In other words, the antenna parameter may change with time. This helps different antenna parameters adapt to different service features in real time, and helps improve receiving performance of a device in a network (for example, improve reference signal received power of the terminal device), thereby improving spectral efficiency and throughput of the network.

In a possible implementation, after receiving the first measurement data, the access network device determines a first utility indicator corresponding to the first measurement data, and determines a second antenna parameter combination based on the first utility indicator. The measurement data is data obtained through measurement by a terminal device in a network of a center frequency, and the utility indicator indicates networking performance. For example, when the measurement data is reference signal received power RSRP, a utility indicator corresponding to the measurement data is a statistical distribution eigenvalue of an RSRP level.

In the method, the access network device may convert the first measurement data fed back by the terminal device into the first utility indicator indicating networking performance. If the first utility indicator is lower than an expected utility indicator in the network (that is, networking performance is poor when the first antenna parameter combination is used), the access network device may adjust the parameter of the antenna from the first antenna parameter combination to the second antenna parameter combination. This helps improve networking performance.

In a possible implementation, the access network device receives X groups of measurement data from the terminal device, where any one of the X groups of measurement data includes measurement data of the first center frequency and measurement data of the second center frequency, the X groups of measurement data include the first measurement data, and X is a positive integer.

In the method, the access network device may receive multiple groups of measurement data fed back by the terminal for different antenna parameter combinations. For example, at a first moment, the access network device receives a first group of measurement data from the terminal device, where the first group of measurement data includes, when the first antenna parameter combination is used for the first center frequency and the second center frequency at the first moment, measurement data fed back by a terminal device in a network of the first center frequency and measurement data fed back by a terminal device in a network of the second center frequency. For another example, at a second moment, the access network device receives a second group of measurement data from the terminal device, where the second group of measurement data includes, when the second antenna parameter combination is used for the first center frequency and the second center frequency at the second moment, measurement data fed back by a terminal device in a network of the first center frequency and measurement data fed back by a terminal device in a network of the second center frequency.

In a possible implementation, the measurement data includes a signal-to-noise ratio SNR or reference signal received power RSRP.

In a possible implementation, the access network device determines X utility indicators based on the X groups of measurement data, where each of the X groups of measurement data corresponds to one utility indicator; and then determines, based on a service feature, an antenna parameter combination corresponding to a largest value of X utility indicators matching the service feature as the second antenna parameter combination.

In the method, the access network device not only determines the antenna parameter combination based on the real-time terminal measurement feedback, but also determines the antenna parameter combination based on the service feature. Different measurement data corresponds to different utility indicators. For example, when the measurement data is an SNR, a utility indicator corresponding to the measurement data is a channel quality indicator CQI level corresponding to the SNR; or when the measurement data is RSRP, a utility indicator corresponding to the measurement data is an RSRP level corresponding to the RSRP. For another example, when the measurement data is an SNR, the utility indicator corresponding to the measurement data is throughput (throughput) or spectral efficiency (spectrum efficiency) corresponding to the SNR. Further, the access network device may respectively convert the X groups of measurement data fed back by the terminal device into X utility indicators indicating networking performance. Then, a largest value (that is, a value of optimal networking performance) is selected from utility indicators matching the service feature, an antenna parameter combination corresponding to the largest value is obtained, and a parameter of the antenna is adjusted to the antenna parameter combination corresponding to the largest value. This improves networking performance. Optionally, when parameters of antennas are adjusted, parameters of only some antennas may be adjusted, for example, only the antenna parameter of the first center frequency is adjusted, and the antenna parameter of the second center frequency is not adjusted; or parameters of all antennas may be adjusted, for example, the antenna parameter of the first center frequency and the antenna parameter of the second center frequency are adjusted.

In a possible implementation, the service feature includes one or more of the following: a service time period, user location distribution, and measurement feedback distribution. The user location distribution includes a direction angle range of the terminal device. The measurement feedback distribution includes proportions of terminal devices with different channel quality indicator levels and/or proportions of terminal devices with different reference signal received power levels.

In the method, when the service feature is the service time period, the service time period may be divided into multiple segments in a time sequence, and each segment represents a service feature. When the service feature is user location distribution, a horizontal coordinate of the user location distribution is a direction angle range of the terminal device, a vertical coordinate of the user location distribution is a probability of the direction angle range of the terminal device, and each group of direction angle ranges and a corresponding probability represent a service feature. The direction angle range of the terminal device is determined based on a geographical location and an angle of the terminal device. When the service feature is the measurement feedback distribution, a horizontal coordinate of the measurement feedback distribution is the CQI level, and a vertical coordinate is a proportion of terminal devices at the CQI level; or a horizontal coordinate of the measurement feedback distribution is the RSRP level, and a vertical coordinate is a proportion of terminal devices at the RSRP level. Each group of CQI levels represents a service feature, or each group of RSRP levels represents a service feature.

In a possible implementation, the user location distribution in the service feature is user location distribution in a time period before a current time period; or the user location distribution is obtained through prediction based on user location distribution in a time period before a current time period.

In the method, the access network device may directly use user location distribution in the time period before the current time period. For example, the access network device obtains the user location distribution from 10 o'clock to 12 o'clock as a service feature, and the user location distribution from 10 o'clock to 12 o'clock is also used as a service feature from 12 o'clock to 14 o'clock. This helps simplify a processing procedure of the access network device. Alternatively, the access network device may predict user location distribution in the current time period. For example, the access network device obtains user location distribution from 10 o'clock to 12 o'clock, and predicts user location distribution from 12 o'clock to 14 o'clock by using the user location distribution from 10 o'clock to 12 o'clock (user location distribution in an adjacent time period may not change greatly), to determine the service feature.

In a possible implementation, when the service feature includes the service time period, the X utility indicators of the service feature include one or more of the following: statistical distribution eigenvalues of X channel quality indicator levels in the service time period, statistical distribution eigenvalues of X reference signal received power levels in the service time period, and statistical distribution eigenvalues of X direction angle ranges in the service time period.

In the method, the utility indicator of the service feature is specifically defined when the service feature includes the service time period. For example, when the service feature includes the service time period from 10 o'clock to 12 o'clock, the X utility indicators of the service feature include one or more of the following: statistical distribution eigenvalues of X CQI levels in the service time period from 10 o'clock to 12 o'clock (for example, a proportion of terminal devices with a high CQI level, a proportion of terminal devices with a medium CQI level, and a proportion of terminal devices with a low CQI level from 10 o'clock to 12 o'clock), statistical distribution eigenvalues of X RSRP levels in the service time period from 10 o'clock to 12 o'clock (for example, a proportion of terminal devices at a first RSRP level and a proportion of terminal devices at a second RSRP level from 10 o'clock to 12 o'clock), and statistical distribution eigenvalues of X direction angle ranges in the service time period from 10 o'clock to 12 o'clock (for example, a proportion of terminal devices in a first direction angle range from 10 o'clock to 12 o'clock and a proportion of terminal devices in a second direction angle range from 10 o'clock to 12 o'clock). When multiple service features are included, each service feature may correspond to different utility indicators. For example, when the service feature includes multiple service time periods (such as a service time period from 10 o'clock to 12 o'clock and a service time period from 12 o'clock to 14 o'clock), the utility indicator of each service time period may include one or more of the foregoing utility indicators.

In a possible implementation, when the service feature includes the user location distribution, the X utility indicators of the service feature include one or more of the following: statistical distribution eigenvalues of X channel quality indicator levels for the user location distribution, or statistical distribution eigenvalues of X reference signal received power levels for the user location distribution.

In the method, the utility indicator of the service feature is specifically defined when the service feature includes the user location distribution. For example, when the service feature includes that the user location distribution is in a first direction angle range (for example, the first direction angle range is 0 to 90 degrees), the X utility indicators of the service feature include one or more of the following: statistical distribution eigenvalues of X CQI levels in the first direction angle range (for example, a proportion of terminal devices with a high CQI level in the direction angle range 0 to 90 degrees, a proportion of terminal devices with a medium CQI level, and a proportion of terminal devices with a low CQI level) or statistical distribution eigenvalues of X RSRP levels in the first direction angle range (for example, a proportion of terminal devices at a first RSRP level in the direction angle range of 0 to 90 degrees and a proportion of terminal devices at a second RSRP level in the direction angle range of 0 to 90 degrees). When multiple service features are included, each service feature may correspond to different utility indicators. For example, when the service feature includes multiple pieces of user location distribution (such as the first direction angle range is 0-90 degrees, and the second direction angle range is 90-180 degrees), all utility indicators of each piece of user location distribution may include one or more of the foregoing utility indicators.

In a possible implementation, when the service feature includes the measurement feedback distribution, the X utility indicators of the service feature include statistical distribution eigenvalues of X direction angle ranges for the measurement feedback distribution.

In the method, the utility indicator of the service feature is specifically defined when the service feature includes the measurement feedback distribution. For example, when the service feature includes that the measurement feedback distribution is the first RSRP level, the X utility indicators of the service feature include statistical distribution eigenvalues (for example, a proportion of terminal devices in a first direction angle range in the first RSRP level and a proportion of terminal devices in a second direction angle range in the first RSRP level) of X direction angle ranges in the first RSRP level. For another example, when the service feature includes that the measurement feedback distribution is a high CQI level, the X utility indicators of the service feature include statistical distribution eigenvalues (for example, a proportion of terminal devices in a first direction angle range in the high CQI level, and a proportion of terminal devices in a second direction angle range in the high CQI level) of X direction angle ranges in the high CQI level. When multiple service features are included, each service feature may correspond to different utility indicators. For example, when the service feature includes multiple pieces of measurement feedback distribution (for example, a high CQI level, a medium CQI level, and a low CQI level), all utility indicators of each piece of measurement feedback distribution may include one or more of the foregoing utility indicators.

In a possible implementation, before receiving the first measurement data from the terminal device, the access network device configures the first antenna parameter combination as the parameter of the antenna, where the first antenna parameter combination is an initial default value.

In the method, the access network device may preset the first antenna parameter combination (for example, preset a group of antenna parameter combinations based on a specific networking engineering parameter), to complete initial networking optimization.

In a possible implementation, the antenna parameter includes one or more of the following: a horizontal direction angle, a vertical direction angle, a horizontal beam width, and a vertical beam width.

According to a second aspect, this application provides a communication apparatus. The communication apparatus may be an access network device, an apparatus in an access network device, or an apparatus that can be used together with an access network device. In a design, the communication apparatus may include a one-to-one corresponding module for performing the method/operation/step/action described in any one of the first aspect or the possible implementations of the first aspect. The module may be a hardware circuit, or may be software, or may be implemented by a combination of a hardware circuit and software. In a design, the communication apparatus may include a processing unit and a communication unit.

For specific descriptions of the method performed by the access network device, refer to corresponding descriptions according to any one of the first aspect or the possible implementations of the first aspect. Details are not described herein. It may be understood that the communication apparatus may also implement effect that can be implemented in the first aspect.

According to a third aspect, this application provides an access network device, including a processor. The processor is coupled to a memory, the memory is configured to store instructions, and when the instructions are executed by the processor, the terminal device is enabled to implement the method according to any one of the first aspect or the possible implementations of the first aspect.

According to a fourth aspect, this application provides a computer-readable storage medium. The computer-readable storage medium stores instructions, and when the instructions are run on a computer, the computer is enabled to perform the method according to any one of the first aspect or the possible implementations of the first aspect.

According to a fifth aspect, this application provides a chip system. The chip system includes a processor and an interface, and may further include a memory, configured to implement functions in the method according to any one of the first aspect or the possible implementations of the first aspect. The chip system may include a chip, or may include a chip and another discrete device.

According to a sixth aspect, this application provides a computer program product, including instructions. When the instructions are run on a computer, the computer is enabled to perform the method according to any one of the first aspect or the possible implementations of the first aspect.

## BRIEF DESCRIPTION OF DRAWINGS

FIG. 1 is a diagram of a communication system according to this application;
FIG. 2 is a diagram of an access network device using a multi-band heterogeneous antenna with a time-varying configuration according to this application;
FIG. 3 is a schematic flowchart of a method for configuring an antenna according to this application;
FIG. 4 is a schematic flowchart of adjusting a parameter of an antenna according to this application;
FIG. 5 is another schematic flowchart of adjusting a parameter of an antenna according to this application;
FIG. 6 is a diagram of an apparatus for configuring an antenna according to this application; and
FIG. 7 is a diagram of an access network device according to this application.

## DESCRIPTION OF EMBODIMENTS

In this application, "/" may represent an "or" relationship between associated objects. For example, A/B may represent A or B. In addition, "and/or" may indicate that there are three relationships between associated objects. For example, A and/or B may represent the following three cases: Only A exists, both A and B exist, and only B exists, where A and B may be singular or plural. For ease of description of technical solutions of this application, in this application, terms such as "first" and "second" may be used to distinguish between technical features with same or similar functions. The terms such as "first" and "second" do not limit a quantity and an execution sequence, and the terms such as "first" and "second" do not indicate a definite difference. In this application, a term such as "example" or "for example" indicates an example, an illustration, or a description. Any embodiment or design scheme described as an "example" or "for example" should not be explained as being more preferred or having more advantages than another embodiment or design scheme. The terms such as "example" or "for example" are used to present a related concept in a specific manner for ease of understanding.

The following describes technical solutions of this application with reference to accompanying drawings.

For example, to resolve a problem that spectral efficiency and throughput of a network are reduced because a service feature in an actual system differs greatly from a preset network model, this application provides a method for configuring an antenna. The method helps improve spectral efficiency and throughput of the network.

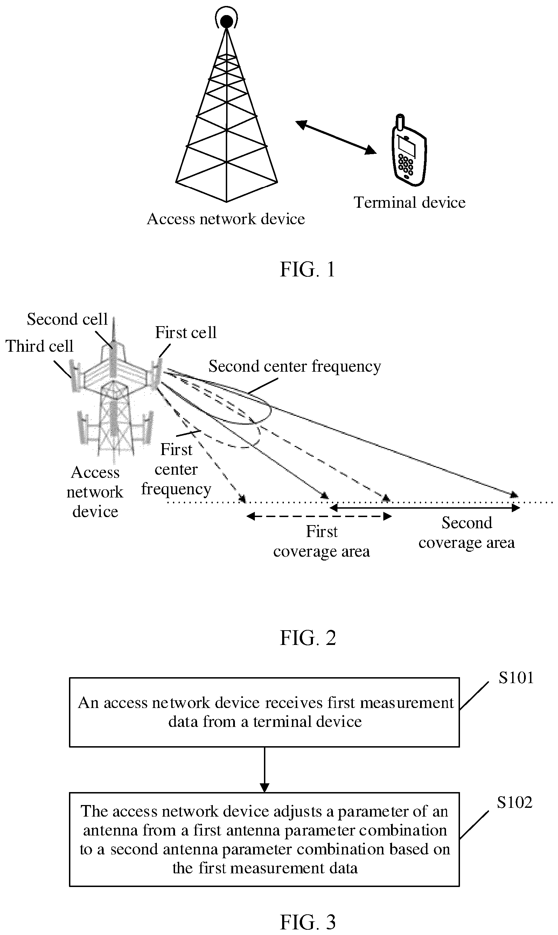

The method for configuring the antenna provided in this application may be applied to a communication system, and specifically, may be applied to a communication system based on multi-band coordination. For example, FIG. 1 is a diagram of a communication system according to this application. The communication system includes a terminal device and an access network device, and the terminal device is communicatively connected to the access network device.

The communication system mentioned in this application includes but is not limited to: a narrow band-Internet of things (narrow band-Internet of things, NB-IoT) system, a global system for mobile communications (global system for mobile communications, GSM), an enhanced data rate for GSM evolution (enhanced data rate for GSM evolution, EDGE) system, a wideband code division multiple access (wideband code division multiple access, WCDMA) system, a code division multiple access 2000 (code division multiple access, CDMA2000) system, a time division-synchronization code division multiple access (time division-synchronization code division multiple access, TD-SCDMA) system, a long term evolution (long term evolution, LTE) system, three application scenarios of a 5G mobile communication system: enhanced mobile broadband (enhanced mobility broadband, eMBB), ultra-reliable and low-latency communication (ultra-reliable and low-latency communications, URLLC), and enhanced machine-type communication (enhanced machine-type communication, eMTC), and a future communication system (for example, 6G/7G).

The terminal device is also referred to as user equipment (user equipment, UE), a mobile station (mobile station, MS), a mobile terminal (mobile terminal, MT), or the like, and is a device that provides a user with voice and/or data connectivity, for example, a handheld device or a vehicle-mounted device having a wireless connection function. Currently, for example, the terminal device is a mobile phone (mobile phone), a tablet computer, a notebook computer, a palmtop computer, a mobile internet device (mobile internet device, MID), a wearable device, an uncrewed aerial vehicle, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a terminal device in a 5G network, a terminal device in a future evolved PLMN network, a terminal device in a future communication system, or the like.

The access network device is a radio access network (radio access network, RAN) node (or device) that connects the terminal device to a wireless network, and may also be referred to as a base station. Currently, for example, the RAN node is a continuously evolved NodeB (gNB), a transmission reception point (transmission reception point, TRP), an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (baseband unit, BBU), a wireless fidelity (wireless fidelity, Wi-Fi) access point (access point, AP), a satellite in a satellite communication system, a radio controller in a cloud radio access network (cloud radio access network, CRAN) scenario, a wearable device, an uncrewed aerial vehicle, a device in an internet of vehicles (for example, a vehicle to everything (vehicle to everything, V2X) device), a communication device in device to device (device to device, D2D) communication, or the like. In addition, in a network structure, the access network device may include a central unit (central unit, CU) node, a distributed unit (distributed unit, DU) node, or a RAN device including a CU node and a DU node. The RAN device including the CU node and the DU node splits protocol layers of an eNB in a long term evolution (long term evolution, LTE) system. Functions of some protocol layers are centrally controlled by the CU, functions of some or all of the remaining protocol layers are distributed in the DU, and the CU centrally controls the DU.

I. Related concepts in this application

1. Architecture of an access network device in this application

A multi-band heterogeneous architecture is used by the access network device in this application. For example, FIG. 2 shows an access network device of a multi-band heterogeneous antenna according to this application. The access network device includes multiple cells (for example, a first cell, a second cell, and a third cell in FIG. 2). One cell may include multiple center frequencies (for example, the first cell includes a first center frequency and a second center frequency). The multiple center frequencies correspond to multiple sets of antennas, and different antennas have different antenna parameters (in other words, antenna parameters of different center frequencies are different). If the first center frequency is shown by a dashed line curve in FIG. 2, and the second center frequency is shown by a solid line curve in FIG. 2; and an antenna parameter of the first center frequency is different from an antenna parameter of the second center frequency, in this case, a coverage area (for example, a dashed line in FIG. 2) formed by the first center frequency is also different from a coverage area (for example, a solid line in FIG. 2) formed by the second center frequency, that is shown by the first coverage area and the second coverage area in FIG. 2. FIG. 2 is merely an example, and does not limit a quantity of cells and a quantity of center frequencies of the access network device in this application.

2. Parameter of an antenna and antenna parameter combination

The parameter of the antenna (also referred to as an antenna parameter of an antenna) is used to configure an antenna angle and/or a beam width of the antenna, so that a coverage area formed by the antenna (or a center of a frequency band of the antenna may be used to represent the antenna, and a center frequency in the following is the center of the frequency band) points to an area, and signal strength in the area meets a specific signal strength condition. Specifically, the antenna parameter may include but is not limited to a horizontal direction angle, a vertical direction angle, a horizontal beam width, or a vertical beam width.

Multiple antenna parameters of multiple center frequencies at the same moment are referred to as an antenna parameter combination. For example, at a first moment, a first antenna parameter combination includes a first antenna parameter of a first center frequency and a first antenna parameter of a second center frequency; and at a second moment, a second antenna parameter combination includes a second antenna parameter of the first center frequency and a second antenna parameter of the second center frequency, and the first antenna parameter combination and the second antenna parameter combination are different. In other words, as time changes, the access network device may use different antenna parameter combinations, and a specific antenna parameter combination to be used is determined based on measurement data fed back in real time by terminal devices in a network of the first center frequency and a network of the second center frequency.

Optionally, in an initial state (for example, when a parameter of an antenna and another parameter in a network are initialized), an initial default value may be configured as the parameter of the antenna. The initial default value is a group of antenna parameter combinations preset based on a specific networking engineering parameter. For example, reference may be made to an initial default value in a live network. This is not limited in this application.

3. Measurement data

The measurement data is data obtained through measurement by a terminal device in a network of a center frequency. The measurement data may include but is not limited to a signal-to-noise ratio (signal-to-noise ratio, SNR), or reference signal received power (reference signal received power, RSRP). For example, measurement data of the first center frequency includes an SNR and/or RSRP that are/is obtained by the terminal device in the network of the first center frequency through measurement, and measurement data of the second center frequency includes an SNR and/or RSRP that are/is obtained by the terminal device in the network of the second center frequency through measurement. This application is subsequently described by using an example in which the measurement data includes at least one of the SNR or the RSRP.

Optionally, as time changes, the access network device may use different antenna parameter combinations. In this case, when the antenna parameter changes, the measurement data obtained by the terminal device in the network of the center frequency may also change. In this case, the terminal device may obtain multiple groups of measurement data, and any group of measurement data includes measurement data of each center frequency at a same moment. For example, Table 1 is a list of multiple groups of measurement data provided in this application. If the parameter of the antenna is the first antenna parameter combination, the terminal device may obtain first group of measurement data and second group of measurement data through measurement. The first group of measurement data includes, when the parameter of the antenna is the first antenna parameter combination, an SNR and/or RSRP that are/is obtained by a terminal device in a network of the first center frequency through measurement, and an SNR and/or RSRP that are/is obtained by a terminal device in a network of the second center frequency through measurement. The second group of measurement data includes, when the parameter of the antenna is the second antenna parameter combination, an SNR and/or RSRP that are/is obtained by the terminal device in the network of the first center frequency through measurement, and an SNR and/or RSRP that are/is obtained by the terminal device in the network of the second center frequency through measurement. Optionally, the access network device may further include multiple other center frequencies (for example, a third center frequency and a fourth center frequency), and the parameter of the antenna may also be another antenna parameter combination (for example, a third antenna parameter combination). In this case, when the parameter of the antenna is the first antenna parameter combination, the first group of measurement data may further include an SNR and/or RSRP that are/is obtained by a terminal device in a network of the third center frequency through measurement; when the parameter of the antenna is the second antenna parameter combination, the second group of measurement data may further include the SNR and/or the RSRP that are/is obtained by the terminal device in the network of the third center frequency through measurement; and when the parameter of the antenna is the third antenna parameter combination, the multiple groups of measurement data may further include a third group of measurement data obtained by the terminal device through measurement. The foregoing content is represented by an ellipsis in Table 1, and is not completely shown. This is not limited in this application.

The terminal device sends the measurement data to a network side (for example, an access network device). Therefore, the network side may obtain measurement feedback distribution based on the measurement data.

Table 1: List of multiple groups of measurement data

| The parameter of the antenna is the first antenna parameter combination | First group of measurement data | The SNR and/or the RSRP that are/is obtained by the terminal device in the network of the first center frequency through measurement |
| | | The SNR and/or the RSRP that are/is obtained by the terminal device in the network of the second center frequency through measurement |
| | | ... |
| The parameter of the antenna is the second antenna parameter combination | Second group of measurement data | The SNR and/or the RSRP that are/is obtained by the terminal device in the network of the first center frequency through measurement |
| | | The SNR and/or the RSRP that are/is obtained by the terminal device in the network of the second center frequency through measurement |
| | | ... |
| ... | ... | ... |

4. Utility indicator

The utility indicator indicates networking performance. For example, the networking performance includes spectral efficiency and throughput of a network, and is obtained by the access network device through processing based on measurement data. Specifically, the utility indicator is obtained by performing function modeling based on the measurement data, or is obtained by using a machine learning algorithm based on the measurement data. For example, when the measurement data includes the SNR, the access network device may obtain, by performing function modeling based on the SNR, that the utility indicator corresponding to the measurement data is a channel quality indicator (channel quality indicator, CQI) level corresponding to the SNR. For another example, when the measurement data includes the RSRP, the access network device may obtain, based on the RSRP and by using a machine learning algorithm, that the utility indicator corresponding to the measurement data is an RSRP level. For another example, when the measurement data includes the SNR, the access network device may obtain, by performing function modeling based on the SNR, that a utility indicator corresponding to the measurement data is throughput (throughput) or spectral efficiency (spectrum efficiency) corresponding to the SNR.

Optionally, as time changes, the measurement data obtained by the terminal device may change. In this case, the utility indicator corresponding to the measurement data may also change. For example, when the terminal device obtains multiple groups of measurement data at different moments, the multiple groups of measurement data correspond to multiple utility indicators, and each group of measurement data corresponds to one utility indicator. For example, if the first group of measurement data includes an SNR that is obtained by a terminal device in a network of a first center frequency through measurement at a first moment and an SNR that is obtained by a terminal device in a network of a second center frequency through measurement at the first moment, a first utility indicator corresponding to the first group of measurement data is a first CQI level obtained by the access network device by performing function modeling based on the two SNRs. For another example, if the second group of measurement data includes an SNR that is obtained by the terminal device in the network of the first center frequency through measurement at a second moment and an SNR that is obtained by the terminal device in the network of the second center frequency through measurement at the second moment, a second utility indicator corresponding to the second group of measurement data is a second CQI level obtained by the access network device by performing function modeling based on the two SNRs.

5. Service feature

The service feature is used to distinguish services that change in real time in the network. The service feature in this application may include but is not limited to a service time period, user location distribution, or measurement feedback distribution. In a service feature, if a utility indicator corresponding to the service feature is poor, the access network device may adjust a parameter of an antenna, to optimize the utility indicator corresponding to the service feature. That the utility indicator is poor may be understood as that spectral efficiency of a network is less than or equal to a first threshold, or throughput is less than or equal to a second threshold. The first threshold or the second threshold may be set based on an actual requirement. This is not limited in this application. The foregoing descriptions are also applicable to descriptions of any embodiment of this application, and details are not described.

(1) Service time period

The service time period is used to distinguish a changed service in a network from a time dimension. When the service feature is the service time period, the service time period may be divided into multiple segments in a time sequence, and each segment represents a service feature. For example, 24 hours are divided into 12 segments, that is 12 service time periods. Each service time period is 2 hours.

(2) User location distribution

Different user location distribution is used to distinguish a changed service in a network. The user location distribution includes a direction angle range of the terminal device. Specifically, when the service feature is user location distribution, a horizontal coordinate of the user location distribution is a direction angle range of the terminal device, a vertical coordinate of the user location distribution is a probability of the direction angle range of the terminal device, and each group of direction angle ranges represents a service feature. A direction angle of the terminal device is a direction angle corresponding to the terminal device, and the direction angle belongs to [0, 360°] or [0, 180°]. The direction angle range of the terminal device includes a horizontal direction angle range and a vertical direction angle range. For example, Table 2 is a list of user location distribution provided in this application. If the direction angle range of the terminal device includes a first direction angle range, a second direction angle range, and a third direction angle range, the first direction angle range and a corresponding probability represent a first type of user location distribution, the second direction angle range and a corresponding probability represent a second type of user location distribution, and the third direction angle range and a corresponding probability represent a third type of user location distribution. Optionally, the direction angle range of the terminal device may further include multiple other direction angle ranges (for example, a fourth direction angle range). In this case, the list of user location distribution includes fourth user location distribution (that is, the fourth direction angle range and a corresponding probability). The other direction angle ranges are represented by an ellipsis in Table 2, and not shown. This is not limited in this application.

Table 2: List of user location distribution

| Direction angle range (unit: degree) | Probability of the direction angle range |
|---|---|
| First direction angle range | 10% |
| Second direction angle range | 40% |
| Third direction angle range | 10% |
| ... | ... |

Optionally, the user location distribution in the service feature is user location distribution in a time period before a current time period; or the user location distribution is obtained through prediction based on user location distribution in a time period before a current time period.
For example, the access network device obtains the user location distribution from 10 o'clock to 12 o'clock as a service feature, and the user location distribution from 10 o'clock to 12 o'clock is also used as a service feature from 12 o'clock to 14 o'clock. This helps simplify a processing procedure of the access network device. Alternatively, the access network device obtains user location distribution from 10 o'clock to 12 o'clock, and predicts user location distribution from 12 o'clock to 14 o'clock by using the user location distribution from 10 o'clock to 12 o'clock (user location distribution in an adjacent time period may not change greatly), to determine the service feature.

(3) Measurement feedback distribution

Different measurement feedback distribution is used to distinguish a changed service in a network. The measurement feedback distribution includes a CQI level and/or an RSRP level. Specifically, when the service feature is the measurement feedback distribution, a horizontal coordinate of the measurement feedback distribution is the CQI level, and a vertical coordinate is a proportion of terminal devices at the CQI level; or a horizontal coordinate of the measurement feedback distribution is the RSRP level, and a vertical coordinate is a proportion of terminal devices at the RSRP level. Each group of CQI levels represents a service feature, or each group of RSRP levels represents a service feature. For example, Table 3 is a measurement feedback distribution list provided in this application. Table 3 is described by using an example in which the measurement feedback distribution is distribution of CQI levels. The CQI level may be classified into a high CQI level, a medium CQI level, and a low CQI level. A CQI value range is 0 to 31, and a common value is 12 to 24. In this application, if the high CQI level is a CQI value range 25 to 30, the medium CQI level is a CQI value range 12 to 24, and the low CQI level is a CQI value range 0 to 11, the high CQI level and a corresponding terminal device proportion represent a first type of measurement feedback distribution, the medium CQI level and a corresponding terminal device proportion represent a second type of measurement feedback distribution, and the low CQI level and a corresponding terminal device proportion represent a third type of measurement feedback distribution. Optionally, when the measurement feedback distribution is RSRP level distribution, another measurement feedback distribution list similar to Table 3 may also be obtained, and details are not described herein. It should be understood that the value ranges of the medium, high, and low CQI levels are merely examples. In actual use, the value ranges of the medium, high, and low CQI levels may be set based on a requirement. This is not limited in this application.

Table 3: Measurement feedback distribution list

| CQI level | Proportion of terminal devices with CQI levels |
|---|---|
| High | 10% |
| Medium | 80% |
| Low | 10% |

II. The method for configuring the antenna provided in this application

FIG. 3 is a schematic flowchart of a method for configuring an antenna according to this application. The method for configuring the antenna is applied to the communication system shown in FIG. 1, and may be specifically applied to the access network device shown in FIG. 2. For example, the method for configuring the antenna may be performed by the access network device, and the method includes the following steps.

S101: The access network device receives first measurement data from a terminal device.

When a parameter of the antenna is a first antenna parameter combination, data obtained by the terminal device in a network through measurement is the first measurement data. When the access network device includes multiple center frequencies, the first measurement data includes measurement data of a terminal device in a network of each of the multiple center frequencies. For example, when the access network device includes a first center frequency and a second center frequency, the first antenna parameter combination includes a first antenna parameter $P_{A_1,1}$ of the first center frequency and a first antenna parameter $P_{A_2,1}$ of the second center frequency, where the subscript $A_1$ represents the first center frequency, $A_2$ represents the second center frequency, and the subscript 1 represents a number of the antenna parameter combination. The first measurement data includes measurement data $F_{A_1,1}$ of a terminal device in a network of the first center frequency and measurement data $F_{A_2,1}$ of a terminal device in a network of the second center frequency. In this case, the first measurement data may be represented as a set $\{F_{A_1,1}, F_{A_2,1}\}$ including $F_{A_1,1}$ and $F_{A_2,1}$. Optionally, when the access network device further includes multiple other center frequencies (for example, a third center frequency and a fourth center frequency), and if a total quantity of center frequencies is G, the first measurement data may be represented as $\{F_{A_1,1}, F_{A_2,1}, ...., F_{A_G,1}\}$, where G is a positive integer greater than 2. Optionally, when the network of the first center frequency may include multiple terminal devices (for example, including N terminal devices), the measurement data $F_{A_1,1}$ of the terminal device in the network of the first center frequency may also be represented as a set

$$F_{A_1,1} = \left\{ F_{A_1,1}^{UE_1}, F_{A_1,1}^{UE_2}, ..., F_{A_1,1}^{UE_N} \right\}$$ including measurement data of the N terminal devices. Similarly, when the network of the second center frequency may include multiple terminal devices (for example, including M terminal devices), the measurement data $F_{A_2,1}$ of the terminal device in the network of the second center frequency may **also be** represented as a set $$F_{A_2,1} = \left\{ F_{A_2,1}^{UE_1}, F_{A_2,1}^{UE_2}, ..., F_{A_2,1}^{UE_M} \right\}$$ including measurement data of the M terminal devices. **In** this case, the first measurement data may be represented as a set $$\left\{ F_{A_1,1}^{UE_1}, F_{A_1,1}^{UE_2}, ..., F_{A_1,1}^{UE_N}, F_{A_2,1}^{UE_1}, F_{A_2,1}^{UE_2}, ..., F_{A_2,1}^{UE_M} \right\}$$ including $F_{A_1,1}$ and $F_{A_2,1}$.

Optionally, the access network device receives X groups of measurement data from the terminal device. Any one of the X groups of measurement data includes measurement data of the first center frequency and measurement data of the second center frequency, the X groups of measurement data include the first measurement data, and X is a positive integer.

For example, when X=1, it indicates that the access network device receives a group of measurement data, and the group of measurement data is the first measurement data. When X is a positive integer greater than or equal to 2, it indicates that the access network device receives at least two groups of measurement data.

For example, when X=2, the access network device receives two groups of measurement data fed back by one terminal device (for example, referred to as a terminal device 1) in the network of the first center frequency and one terminal device (for example, referred to as a terminal device 2) in the network of the second center frequency. When the parameter of the antenna is the first antenna parameter combination $\{P_{A1,1}, P_{A2,1}\}$, if a first group of measurement data includes measurement data $F_{A1,1}$ of the terminal device 1 in the network of the first center frequency and measurement data $F_{A2,1}$ of the terminal device 2 in the network of the second center frequency, the first group of measurement data may be represented as $\{F_{A1,1}, F_{A2,1}\}$. When the parameter of the antenna is a second antenna parameter combination $\{P_{A1,2}, P_{A2,2}\}$, if a second group of measurement data includes measurement data $F_{A1,2}$ of the terminal device 1 in the network of the first center frequency and measurement data $F_{A2,2}$ of the terminal device 2 in the network of the second center frequency, the second group of measurement data may be represented as $\{F_{A1,2}, F_{A2,2}\}$. Optionally, when the network of the first center frequency may include the multiple terminal devices (for example, include the N terminal devices), the measurement data $F_{A1,1}$ of the terminal device in the network of the first center frequency may also be represented as the set

$$F_{A_1,1} = \left\{ F_{A_1,1}^{UE_1}, F_{A_1,1}^{UE_2}, ..., F_{A_1,1}^{UE_N} \right\}$$

including measurement data of the N terminal devices. Similarly, when the network of the second center frequency may include the multiple terminal devices (for example, include the M terminal devices), the measurement data $F_{A2,1}$ of the terminal device in the network of the second center frequency may also be represented as the set $$F_{A_2,1} = \left\{ F_{A_2,1}^{UE_1}, F_{A_2,1}^{UE_2}, ..., F_{A_2,1}^{UE_M} \right\}$$ including measurement data of the M terminal devices. In this case, the first group measurement data may be represented as the set

$$\left\{ F_{A_1,1}^{UE_1}, F_{A_1,1}^{UE_2}, ..., F_{A_1,1}^{UE_N}, F_{A_2,1}^{UE_1}, F_{A_2,1}^{UE_2}, ..., F_{A_2,1}^{UE_M} \right\}$$

including $F_{A1,1}$ and $F_{A2,1}$. The second group of measurement data to the X$^{th}$ group of measurement data are similar to the first group of measurement data. Details are not described herein.

Optionally, before receiving the first measurement data from the terminal device, the access network device configures the first antenna parameter combination as the parameter of the antenna, where the first antenna parameter combination is an initial default value. For example, the access network device may preset the first antenna parameter combination (for example, preset a group of antenna parameter combinations based on a specific networking engineering parameter), to complete initial networking optimization.

Optionally, when initializing the parameter of the antenna and the other parameters in the network, the access network device may further preset multiple antenna parameter combinations. For example, the access network device presets K antenna parameter combinations, and any antenna parameter combination (whose number is k, and k is a positive integer greater than 0 and less than or equal to K) includes a k$^{th}$ antenna parameter $P_{A1,k}$ of the first center frequency and a k$^{th}$ antenna parameter $P_{A2,k}$ of the second center frequency, that is, a k$^{th}$ antenna parameter combination may be represented as a set $\{P_{A1,k}, P_{A2,k}\}$ including $P_{A1,k}$ and $P_{A2,k}$. Optionally, when the access network device further includes multiple other center frequencies (for example, a third center frequency and a fourth center frequency), and if a total quantity of center frequencies is G, the k$^{th}$ antenna parameter combination may be represented as $\{P_{A1,k}, P_{A2,k}, ..., P_{AG,k}\}$.

S102: The access network device adjusts the parameter of the antenna from the first antenna parameter combination to the second antenna parameter combination based on the first measurement data.

The access network device adjusts the parameter of the antenna to the second antenna parameter combination, in other words, the access network device configures a status of the antenna based on the second antenna parameter combination. For example, if the second antenna parameter combination includes a horizontal direction angle of 15 degrees and a vertical direction angle of 20 degrees, the horizontal direction angle of the antenna is configured to 15 degrees and the vertical direction angle is configured to 20 degrees.

The access network device may adjust the parameter of the antenna (for example, select one antenna parameter combination from the K antenna parameter combinations as the parameter of the antenna) based on measurement data (for example, X groups of measurement data) fed back by the terminal device. Specifically, this step includes the following several implementations:

1. Implementation 1: In a same service feature, one antenna parameter combination is determined based on one group of measurement data.

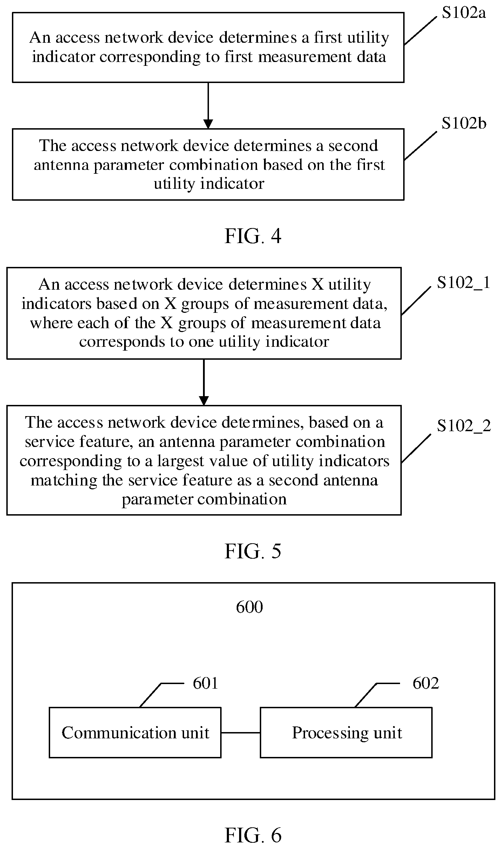

In this implementation, if a service feature remains unchanged, after receiving the first measurement data, the access network device performs analysis based on the first measurement data to obtain that networking performance of a current network is poor, and then adjusts the parameter of the antenna once. For example, FIG. 4 is a schematic flowchart of adjusting a parameter of an antenna according to this application. The following steps are included.

S102a: The access network device determines a first utility indicator corresponding to first measurement data.

S102b: The access network device determines a second antenna parameter combination based on the first utility indicator.

The first utility indicator is obtained by performing conversion processing (for example, performing function modeling based on measurement data) on the first measurement data. For example, when the access network device includes a first center frequency and a second center frequency, the first antenna parameter combination includes a first antenna parameter $P_{A1,1}$ of the first center frequency and a first antenna parameter $P_{A2,1}$ of the second center frequency. In this case, the first measurement data may be represented as a set $\{F_{A1,1}, F_{A2,1}\}$ including measurement data $F_{A1,1}$ of a terminal device in a network of the first center frequency and measurement data $F_{A2,1}$ of a terminal device in a network of the second center frequency. In this case, the first utility indicator corresponding to the first measurement data may be represented as $U_1 = f(F_{A1,1}, F_{A2,1})$. $U_1$ represents the first utility indicator, and $f(.)$ represents a function for calculating a utility indicator based on measurement data. $F_{A1,1}$ and $F_{A2,1}$ in the first measurement data are measurement data of a same type. For example, when $F_{A1,1}$ and $F_{A2,1}$ are SNRs, the first utility indicator $U_1$ is a CQI level, throughput, or spectral efficiency corresponding to the SNR; or when $F_{A1,1}$ and $F_{A2,1}$ are RSRP, the first utility indicator $U_1$ is an RSRP level.

If the first utility indicator is lower than an expected utility indicator in the network (which may also be understood as that networking performance is poor when the first antenna parameter combination is used), for example, if the first utility indicator $U_1$ is throughput, and the throughput is lower than an expected throughput threshold in the network, the first utility indicator $U_1$ is lower than the expected utility indicator in the network, and the access network device may select a new antenna parameter combination (that is, a second antenna parameter combination) from preset K antenna parameter combinations, and configure the second antenna parameter combination as the parameter of the antenna.

In this implementation, the access network device may adjust the antenna parameter once based on the first measurement data fed back by the terminal device, so that an antenna with a time-varying configuration is implemented.

2. Implementation 2: In a same service feature, multiple antenna parameter combinations are used to obtain multiple groups of measurement data, and then an optimal antenna parameter combination is determined based on the multiple groups of measurement data.

In this implementation, if a service feature remains unchanged, the access network device may receive the multiple groups of measurement data, analyze the multiple groups of measurement data to obtain multiple utility indicators, select an optimal utility indicator from the multiple utility indicators, and adjust the parameter of the antenna. For example, FIG. 5 is another schematic flowchart of adjusting a parameter of an antenna according to this application. The following steps are included.

S102_1: The access network device determines X utility indicators based on X groups of measurement data, where each of the X groups of measurement data corresponds to one utility indicator.

S102_2: The access network device determines, based on a service feature, an antenna parameter combination corresponding to a largest value of utility indicators matching the service feature as the second antenna parameter combination.

The X utility indicators are obtained by separately performing conversion processing on the X groups of measurement data. For example, it is assumed that X=3, that is, the access network device receives three groups of measurement data. A first group of measurement data includes, when the parameter of the antenna is a first antenna parameter combination $\{P_{A1,1}, P_{A2,1}\}$, measurement data $F_{A1,1}$ of a terminal device in a network of a first center frequency, and measurement data $F_{A2,1}$ of a terminal device in a network of a second center frequency. In this case, the first group of measurement data may be represented as a set $\{F_{A1,1}, F_{A2,1}\}$ including $F_{A1,1}$ and $F_{A2,1}$, and a 1st utility indicator corresponding to the first group of measurement data may be represented as $U_1 = f(F_{A1,1}, F_{A2,1})$. A second group of measurement data includes, when the parameter of the antenna is a second antenna parameter combination $\{P_{A1,2}, P_{A2,2}\}$, measurement data $F_{A1,2}$ of a terminal device in a network of a first center frequency, and measurement data $F_{A2,2}$ of a terminal device in a network of a second center frequency. In this case, the second group of measurement data may be represented as a set $\{F_{A1,2}, F_{A2,2}\}$ including $F_{A1,2}$ and $F_{A2,2}$, and a 2nd utility indicator corresponding to the second group of measurement data may be represented as $U_2 = f(F_{A1,2}, F_{A2,2})$. A third group of measurement data includes, when the parameter of the antenna is a third antenna parameter combination $\{P_{A1,3}, P_{A2,3}\}$, measurement data $F_{A1,3}$ of a terminal device in a network of a first center frequency, and measurement data $F_{A2,3}$ of a terminal device in a network of a second center frequency. In this case, the second group of measurement data may be represented as a set $\{F_{A1,3}, F_{A2,3}\}$ including $F_{A1,3}$ and $F_{A2,3}$, and a 3rd utility indicator corresponding to the third group of measurement data may be represented as $U_3 = f(F_{A1,3}, F_{A2,3})$. It can be learned from the foregoing descriptions of the antenna parameter combination, the measurement data, and the utility indicator that when the service feature remains unchanged, a correspondence among the antenna parameter combination, the measurement data, and the utility indicator is shown in Table 4. Table 4 is merely an example.

This is not limited in this application.

Table 4: Table of a correspondence among an antenna parameter combination, measurement data, and a utility indicator

| Antenna parameter combination | Measurement data | Utility indicator |
|---|---|---|
| First antenna parameter combination $\{P_{A1,1}, P_{A2,1}\}$ | First group of measurement data $\{F_{A1,1}, F_{A2,1}\}$ | 1st utility indicator $U_1 = f(F_{A1,1}, F_{A2,1})$ |
| Second antenna parameter combination $\{P_{A1,2}, P_{A2,2}\}$ | Second group of measurement data $\{F_{A1,2}, F_{A2,2}\}$ | 2nd utility indicator $U_2 = f(F_{A1,2}, F_{A2,2})$ |
| Third antenna parameter combination $\{P_{A1,3}, P_{A2,3}\}$ | Third group of measurement data $\{F_{A1,3}, F_{A2,3}\}$ | 3rd utility indicator $U_3 = f(F_{A1,3}, F_{A2,3})$ |
| ... | ... | ... |

After determining the X utility indicators, the access network device may determine, based on the service feature, one or more utility indicators matching the service feature, select a largest value in the utility indicators, and adjust a parameter of an antenna to an antenna parameter combination corresponding to the largest value. According to the foregoing descriptions of the service feature, the service feature defined in this application includes one or more of the following: a service time period, user location distribution, and measurement feedback distribution, and utility indicators of different service features also include one or more of a service time period, user location distribution, and measurement feedback distribution.

(1) When the service feature includes the service time period, the X utility indicators of the service feature include one or more of the following: statistical distribution eigenvalues of X CQI levels in the service time period, statistical distribution eigenvalues of X RSRP levels in the service time period, and statistical distribution eigenvalues of X direction angle ranges in the service time period.

For example, when the service feature includes a service time period, and if X=3, three utility indicators in the service time period include statistical distribution eigenvalues of three CQI levels of the service time period, as shown in Table 5.

Table 5: Utility indicator list of a service feature

| CQI level | High CQI level | Medium CQI level | Low CQI level |
|---|---|---|---|
| Statistical distribution eigenvalue 1 of the CQI level | 10% | 80% | 10% |
| Statistical distribution eigenvalue 2 of the CQI level | 20% | 60% | 20% |
| Statistical distribution eigenvalue 3 of the CQI level | 30% | 50% | 20% |

According to Table 5, the access network device selects a largest value of three utility indicators in the service time period, that is, the statistical distribution eigenvalue 1 of the CQI level (which indicates that most terminal devices in the service time period are at the medium CQI level, and there are a small quantity of terminal devices at the low CQI level, and in this case, networking performance is good), and adjusts the parameter of the antenna to an antenna parameter combination corresponding to the statistical distribution eigenvalue 1 of the CQI level. Optionally, Table 5 is merely an example. When the service feature includes a service time period, and if X=3, the three utility indicators in the service time period may further include statistical distribution eigenvalues of three RSRP levels in the service time period, or statistical distribution eigenvalues of three direction angle ranges in the service time period. A utility indicator list similar to that in Table 5 may also be deduced, and details are not described herein.

(2) When the service feature includes the user location distribution, the X utility indicators of the service feature include one or more of the following: statistical distribution eigenvalues of X channel quality indicator levels for the user location distribution, or statistical distribution eigenvalues of X reference signal received power levels for the user location distribution.

For example, when the service feature includes the user location distribution, and if X=3, the three utility indicators of the user location distribution include statistical distribution eigenvalues of three RSRP levels for the user location distribution, as shown in Table 6.

Table 6: Utility indicator list of another service feature

| RSRP level | First RSRP level | Second RSRP level | Third RSRP level |
|---|---|---|---|
| Statistical distribution eigenvalue 1 of the RSRP level | 50% | 40% | 10% |
| Statistical distribution eigenvalue 2 of the RSRP level | 40% | 40% | 20% |
| Statistical distribution eigenvalue 3 of the RSRP level | 40% | 30% | 30% |

According to Table 6, the access network device selects a largest value of three utility indicators of the user location distribution, that is, the statistical distribution eigenvalue 1 of the RSRP level (which indicates that most terminal devices in the location area have high RSRP, and there are few terminal devices with low RSRP, and in this case, networking performance is good), and adjusts the parameter of the antenna to an antenna parameter combination corresponding to the statistical distribution eigenvalue 1 of the RSRP level. Optionally, Table 6 is merely an example. When the service feature includes user location distribution, and if X=3, the three utility indicators of the user location distribution may further include statistical distribution eigenvalues of three CQI levels in the service time period, or a utility indicator list similar to the service feature in Table 6 may be deduced. Details are not described herein.

(3) When the service feature includes the measurement feedback distribution, the X utility indicators of the service feature include statistical distribution eigenvalues of X direction angle ranges for the measurement feedback distribution.

For example, when the service feature includes the measurement feedback distribution, and if X=3, the three utility indicators for the measurement feedback distribution include statistical distribution eigenvalues of three direction angle ranges for the measurement feedback distribution, as shown in Table 7.

Table 7: Utility indicator list of still another service feature

| Direction angle range | First direction angle range | Second direction angle range | Third direction angle range |
|---|---|---|---|
| Statistical distribution eigenvalue 1 of the direction angle range | 10% | 80% | 10% |
| Statistical distribution eigenvalue 2 of the direction angle range | 20% | 60% | 20% |
| Statistical distribution eigenvalue 3 of the direction angle range | 30% | 50% | 20% |

According to Table 7, the access network device selects a largest value of the three utility indicators for the measurement feedback distribution, that is, the statistical distribution eigenvalue 1 of the direction angle range (which indicates that most terminal devices of the measurement feedback distribution are in a same direction angle range, which facilitates centralized coverage of beams, and in this case, networking performance is good), and adjusts the parameter of the antenna to an antenna parameter combination corresponding to the statistical distribution eigenvalue 1 of the direction angle range.

In conclusion, in this implementation, for a same service feature, the parameter of the antenna may be adjusted for multiple times, to obtain multiple groups of measurement data. The access network device may determine an optimal antenna parameter combination based on the multiple groups of measurement data. In a subsequent service transmission process, when a service feature is the service feature, the access network device may configure the optimal antenna parameter combination as the parameter of the antenna. This helps improve spectral efficiency and throughput of a network.

3. Implementation 3: A service feature changes for multiple times, and a parameter of an antenna is adjusted for multiple times.

In this implementation, if a service feature changes, the access network device may configure different antenna parameter combinations for different service features. In this case, the terminal device may measure and feed back multiple groups of measurement data. The access network device analyzes the multiple groups of measurement data to obtain multiple utility indicators, selects an optimal utility indicator from the multiple utility indicators, and adjusts the parameter of the antenna. Steps performed by the access network device in this implementation are similar to those in Implementation 2, and a difference lies in that the X groups of measurement data include multiple groups of measurement data of multiple service features, and the X utility indicators include multiple utility indicators of the multiple service features.

For example, when the service feature is a time period, that is, when the multiple service features include W service time periods, it is assumed that a set of the multiple service features is $\{T_1, T_2, ..., T_W\}$. For the W service time periods, different antenna parameter combinations are configured as parameters of the antenna. It is assumed that K antenna parameter combinations $\{P_{A1,1}, P_{A2,1}, P_{A1,2}, P_{A2,2}, ..., P_{A1,K}, P_{A2,K}\}$ are traversed (in other words, the K antenna parameter combinations are configured as the parameters of an antenna) in any service time period z (z is a positive integer less than or equal to W). In this case, the K groups of measurement data in the service time period w include measurement data $\{F_{A1,1,w}, F_{A1,2w}, ..., F_{A1,K,w}\}$ of a terminal device in a network of a first center frequency and measurement data $\{F_{A2,1,w}, F_{A2,2,w}, ..., F_{A2,K,w}\}$ of a terminal device in a network of a second center frequency. In this case, for the W service time periods, the terminal device may obtain W*K groups of measurement data through measurement. The W*K groups of measurement data respectively correspond to W*K utility indicators (in other words, the X utility indicators in this implementation are specifically the W*K utility indicators). A manner of calculating the utility indicator is the same as the calculation manner in the foregoing implementation, and details are not described herein. For example, Table 8 is a table of a correspondence among a service feature, an antenna parameter combination, measurement data, and a utility indicator.

Table 8: Table of a correspondence among a service feature, an antenna parameter combination, measurement data, and a utility indicator

| Service feature | Antenna parameter combination | Measurement data | Utility indicator |
|---|---|---|---|
| Service time period 1 | First antenna parameter combination $\{P_{A1,1}, P_{A2,1}\}$ | $\{F_{A1,1,1}, F_{A2,1,1}\}$ | $U_{1,1} = f(F_{A1,1,1}, F_{A2,1,1})$ |
| | Second antenna parameter combination $\{P_{A1,2}, P_{A2,2}\}$ | $\{F_{A1,2,1}, F_{A2,2,1}\}$ | $U_{2,1} = f(F_{A1,2,1}, F_{A2,2,1})$ |
| | ... | ... | ... |
| | Kth antenna parameter combination $\{P_{A1,K}, P_{A2,K}\}$ | $\{F_{A1,K,1}, F_{A2,K,1}\}$ | $U_{K,1} = f(F_{A1,K,1}, F_{A2,K,1})$ |
| Service time period 2 | First antenna parameter combination $\{P_{A1,1}, P_{A2,1}\}$ | $\{F_{A1,1,2}, F_{A2,1,2}\}$ | $U_{1,2} = f(F_{A1,1,2}, F_{A2,1,2})$ |
| | Second antenna parameter combination $\{P_{A1,2}, P_{A2,2}\}$ | $\{F_{A1,2,2}, F_{A2,2,2}\}$ | $U_{2,2} = f(F_{A1,2,2}, F_{A2,2,2})$ |
| | ... | ... | ... |
| | Kth antenna parameter combination $\{P_{A1,K}, P_{A2,K}\}$ | $\{F_{A1,K,2}, F_{A2,K,2}\}$ | $U_{K,2} = f(F_{A1,K,2}, F_{A2,K,2})$ |
| ... | ... | ... | ... |
| Service time period W | First antenna parameter combination $\{P_{A1,1}, P_{A2,1}\}$ | $\{F_{A1,1,W}, F_{A2,1,W}\}$ | $U_{1,W} = f(F_{A1,1,W}, F_{A2,1,W})$ |
| | Second antenna parameter combination $\{P_{A1,2}, P_{A2,2}\}$ | $\{F_{A1,2,W}, F_{A2,2,W}\}$ | $U_{2,W} = f(F_{A1,2,W}, F_{A2,2,W})$ |
| | ... | ... | ... |
| | Kth antenna parameter combination $\{P_{A1,K}, P_{A2,K}\}$ | $\{F_{A1,K,W}, F_{A2,K,W}\}$ | $U_{K,W} = f(F_{A1,K,W}, F_{A2,K,W})$ |

Table 8 is merely an example. For another service feature (for example, Y user location distribution), the terminal device may obtain Y*K groups of measurement data through measurement by traversing K antenna parameter combinations. The Y*K groups of measurement data respectively correspond to Y*K utility indicators, and a correspondence among user location distribution, an antenna parameter combination, measurement data, and a utility indicator may be obtained (that is, a correspondence table similar to Table 8 may be obtained). Details are not described herein.

Optionally, the access network device may retain a correspondence among the service feature, the antenna parameter combination, the measurement data, and the utility indicator. In a subsequent service transmission process, an antenna parameter combination corresponding to a largest value of the utility indicator is selected based on a specific service feature, and is used to configure a parameter of an antenna, to optimize networking performance.

Optionally, when the access network device determines, based on the multiple service features, the largest value of the utility indicators matching the service features, the access network device may select one service feature based on a priority sequence of the multiple service features, and select a largest value of the utility indicators of the service feature. For example, when the multiple service features include a service time period and a direction angle range, and if a priority of the service time period is higher than that of the direction angle range, the access network device selects a largest value 1 of multiple utility indicators in the service time period, and determines an antenna parameter combination corresponding to the largest value 1 as the second antenna parameter combination. Alternatively, when the access network device determines, based on multiple service features, a largest value in the utility indicators matching the service features, the access network device may select a service feature based on a service priority sequence (for example, a type of service that is preferentially ensured) specified by a network side, and select a largest value of the utility indicators of the service feature. For example, when the multiple service features include a service time period, a direction angle range, and a CQI level, and if a service priority sequence specified by the network side is that a CQI level has a highest priority, the access network device selects a largest value 2 in multiple utility indicators of the CQI level, and determines an antenna parameter combination corresponding to the largest value 2 as the second antenna parameter combination.

In conclusion, in this implementation, the service feature may change, and the parameter of the antenna may be adjusted for multiple times as the service feature changes. For example, different antenna parameter combinations are used for different service features. This helps optimize networking performance for the service feature.

To implement the functions in the methods provided in this application, the apparatus or the device provided in this application may include a hardware structure and/or a software module, and implement the foregoing functions in a form of the hardware structure, the software module, or a combination of the hardware structure and the software module. Whether a function in the foregoing functions is performed by using the hardware structure, the software module, or the combination of the hardware structure and the software module depends on particular applications and design constraints of the technical solutions. Division into modules in this application is an example, and is merely logical function division. During actual implementation, another division manner may be used. In addition, functional modules in embodiments of this application may be integrated into one processor, or may exist alone physically, or two or more modules may be integrated into one module. The integrated module may be implemented in a form of hardware, or may be implemented in a form of a software functional module.

FIG. 6 is a diagram of an apparatus for configuring an antenna according to this application. The apparatus for configuring the antenna may include a one-to-one corresponding module for performing the methods/operations/steps/actions described in the method embodiments corresponding to FIG. 3 to FIG. 5. The module may be a hardware circuit, or may be software, or may be implemented by a combination of a hardware circuit and software.

The apparatus for configuring the antenna 600 includes a communication unit 601 and a processing unit 602, configured to implement the method performed by the access network device in the foregoing embodiment.

In a possible implementation, the communication unit 601 is configured to receive first measurement data from a terminal device. The processing unit 602 is configured to adjust a parameter of the antenna from a first antenna parameter combination to a second antenna parameter combination based on the first measurement data, where the first antenna parameter combination includes a first antenna parameter of a first center frequency and a first antenna parameter of a second center frequency, and the second antenna parameter combination includes a second antenna parameter of the first center frequency and a second antenna parameter of the second center frequency.

Optionally, that the processing unit 602 is configured to adjust the parameter of the antenna from the first antenna parameter combination to the second antenna parameter combination based on the first measurement data includes:

determining a first utility indicator corresponding to the first measurement data; and
determining the second antenna parameter combination based on the first utility indicator.

Optionally, that the communication unit 601 is configured to receive the first measurement data from the terminal device includes:

receiving X groups of measurement data from the terminal device, where any one of the X groups of measurement data includes measurement data of the first center frequency and measurement data of the second center frequency, the X groups of measurement data include the first measurement data, and X is a positive integer.

Optionally, the measurement data includes a signal-to-noise ratio or reference signal received power.

Optionally, that the processing unit 602 is configured to adjust the parameter of the antenna from the first antenna parameter combination to the second antenna parameter combination based on the first measurement data includes:

determining X utility indicators based on the X groups of measurement data, where each of the X groups of measurement data corresponds to one utility indicator; and
determining, based on a service feature, an antenna parameter combination corresponding to a largest value of utility indicators matching the service feature as the second antenna parameter combination.

Optionally, the service feature includes one or more of the following: a service time period, user location distribution, and measurement feedback distribution. The user location distribution includes a direction angle range of the terminal device. The measurement feedback distribution includes a channel quality indicator level and/or a reference signal received power level.

Optionally, the user location distribution in the service feature is user location distribution in a time period before a current time period; or the user location distribution is obtained through prediction based on user location distribution in a time period before a current time period.

Optionally, when the service feature includes the service time period, the X utility indicators of the service feature include one or more of the following: statistical distribution eigenvalues of X channel quality indicator levels in the service time period, statistical distribution eigenvalues of X reference signal received power levels in the service time period, and statistical distribution eigenvalues of X direction angle ranges in the service time period.

Optionally, when the service feature includes the user location distribution, the X utility indicators of the service feature include one or more of the following: statistical distribution eigenvalues of X channel quality indicator levels for the user location distribution, or statistical distribution eigenvalues of X reference signal received power levels for the user location distribution.

Optionally, when the service feature includes the measurement feedback distribution, the X utility indicators of the service feature include statistical distribution eigenvalues of X direction angle ranges for the measurement feedback distribution.

Optionally, the processing unit 602 is further configured to:

configure the first antenna parameter combination as the parameter of the antenna, where the first antenna parameter combination is an initial default value.

Optionally, the antenna parameter includes one or more of the following: a horizontal direction angle, a vertical direction angle, a horizontal beam width, and a vertical beam width.

For specific execution procedures of the communication unit 601 and the processing unit 602 in this implementation, refer to the descriptions in the method embodiments corresponding to FIG. 3 to FIG. 5. Details are not described herein. In a method for configuring an antenna implemented by the apparatus for configuring the antenna, the antenna parameter may be adjusted based on measurement data fed back by the terminal device in real time, in other words, the antenna parameter may change with time, so that different antenna parameters can adapt to different service features in real time, thereby improving networking performance.

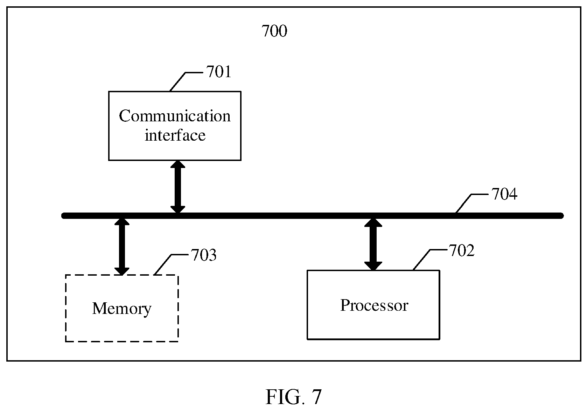

The following describes a device that includes multiple functional units shown in FIG. 6. The device in this application includes the multiple functional units shown in FIG. 6. FIG. 7 is a diagram of an access network device according to this application. The access network device is configured to implement the method for configuring the antenna in the foregoing method embodiment. The access network device 700 may also be a chip system.

The access network device 700 includes a communication interface 701 and a processor 702. The communication interface 701 may be, for example, a transceiver, an interface, a bus, a circuit, or an apparatus that can implement a transceiver function. The communication interface 701 is configured to communicate with another device through a transmission medium, so that the access network device 700 can communicate with the another device. The processor 702 is configured to perform a processing-related operation.

In a possible implementation, the communication interface 701 is configured to receive first measurement data from a terminal device. The processor 702 is configured to adjust a parameter of the antenna from a first antenna parameter combination to a second antenna parameter combination based on the first measurement data, where the first antenna parameter combination includes a first antenna parameter of a first center frequency and a first antenna parameter of a second center frequency, and the second antenna parameter combination includes a second antenna parameter of the first center frequency and a second antenna parameter of the second center frequency.

Optionally, that the processor 702 is configured to adjust a parameter of the antenna from a first antenna parameter combination to a second antenna parameter combination based on the first measurement data includes:

determining a first utility indicator corresponding to the first measurement data; and
determining the second antenna parameter combination based on the first utility indicator.

Optionally, that the communication interface 701 is configured to receive first measurement data from a terminal device includes:

receiving X groups of measurement data from the terminal device, where any one of the X groups of measurement data includes measurement data of the first center frequency and measurement data of the second center frequency, the X groups of measurement data include the first measurement data, and X is a positive integer.

Optionally, the measurement data includes a signal-to-noise ratio or reference signal received power.

Optionally, that the processor 702 is configured to adjust a parameter of the antenna from a first antenna parameter combination to a second antenna parameter combination based on the first measurement data includes:

determining X utility indicators based on the X groups of measurement data, where each of the X groups of measurement data corresponds to one utility indicator; and
determining, based on a service feature, an antenna parameter combination corresponding to a largest value of utility indicators matching the service feature as the second antenna parameter combination.

Optionally, the service feature includes one or more of the following: a service time period, user location distribution, and measurement feedback distribution. The user location distribution includes a direction angle range of the terminal device. The measurement feedback distribution includes a channel quality indicator level and/or a reference signal received power level.

Optionally, the user location distribution in the service feature is user location distribution in a time period before a current time period; or the user location distribution is obtained through prediction based on user location distribution in a time period before a current time period.

Optionally, when the service feature includes the service time period, the X utility indicators of the service feature include one or more of the following: statistical distribution eigenvalues of X channel quality indicator levels in the service time period, statistical distribution eigenvalues of X reference signal received power levels in the service time period, and statistical distribution eigenvalues of X direction angle ranges in the service time period.

Optionally, when the service feature includes the user location distribution, the X utility indicators of the service feature include one or more of the following: statistical distribution eigenvalues of X channel quality indicator levels for the user location distribution, or statistical distribution eigenvalues of X reference signal received power levels for the user location distribution.

Optionally, when the service feature includes the measurement feedback distribution, the X utility indicators of the service feature include statistical distribution eigenvalues of X direction angle ranges for the measurement feedback distribution.

Optionally, the processor 702 is further configured to:
configure the first antenna parameter combination as the parameter of the antenna, where the first antenna parameter combination is an initial default value.

Optionally, the antenna parameter includes one or more of the following: a horizontal direction angle, a vertical direction angle, a horizontal beam width, and a vertical beam width.

For specific execution procedures of the communication interface 701 and the processor 702 in this implementation, refer to the descriptions in the method embodiments corresponding to FIG. 3 to FIG. 5. Details are not described herein. In the method for configuring the antenna implemented by an apparatus for configuring an antenna, the antenna parameter may be adjusted based on measurement data fed back by the terminal device in real time, in other words, the antenna parameter may change with time, so that different antenna parameters can adapt to different service features in real time, thereby improving networking performance.

Optionally, the access network device 700 may further include at least one memory 703, configured to store program instructions and/or data. In an implementation, the memory is coupled to the processor. The coupling in this application may be an indirect coupling or a communication connection between apparatuses, units, or modules in an electrical form, a mechanical form, or another form, and is used for information exchange between the apparatuses, the units, or the modules. The processor may perform an operation in collaboration with the memory. The processor may execute the program instructions stored in the memory. The at least one memory and the processor are integrated together.

In this application, a specific connection medium between the communication interface, the processor, and the memory is not limited. For example, the memory, the processor, and the communication interface are connected through a bus. The bus 704 is represented by a thick line in FIG. 7. A manner of a connection between other components is merely an example for description, and is not construed as a limitation. The bus may be classified into an address bus, a data bus, a control bus, and the like. For ease of representation, only one thick line is used to represent the bus in FIG. 7, but this does not mean that there is only one bus or only one type of bus.

In this application, the processor may be a general-purpose processor, a digital signal processor, an application-specific integrated circuit, a field programmable gate array or another programmable logic device, a discrete gate or transistor logic device, or a discrete hardware assembly, and may implement or perform the methods, steps, and logical block diagrams disclosed in this application. The general-purpose processor may be a microprocessor, any conventional processor, or the like. The steps of the methods disclosed with reference to this application may be directly implemented by a hardware processor, or may be implemented by a combination of hardware in the processor and a software module.

In this application, the memory may be a non-volatile memory, for example, a hard disk drive (hard disk drive, HDD) or a solid-state drive (solid-state drive, SSD), or may be a volatile memory (volatile memory), for example, a random access memory (random access memory, RAM). The memory is any other medium that can carry or store expected program code in a form of instructions or a data structure and that can be accessed by a computer, but is not limited thereto. Alternatively, the memory in this application may be a circuit or any other apparatus that can implement a storage function, and is configured to store program instructions and/or data.

This application provides a communication system. The communication system includes the terminal device and the access network device in the embodiments corresponding to FIG. 3 to FIG. 5.

This application provides a computer-readable storage medium. The computer-readable storage medium stores a program or instructions. When the program or the instructions are run on a computer, the computer is enabled to perform the method for configuring the antenna in the embodiments corresponding to FIG. 3 to FIG. 5.

This application provides a computer program product. The computer program product includes instructions. When the instructions are run on a computer, the computer is enabled to perform the method for configuring the antenna in the embodiments corresponding to FIG. 3 to FIG. 5.

This application provides a chip or a chip system. The chip or the chip system includes at least one processor and an interface. The interface and the at least one processor are interconnected through a line. The at least one processor is configured to run a computer program or instructions, to perform the method for configuring the antenna in the embodiments corresponding to FIG. 3 to FIG. 5.

The interface in the chip may be an input/output interface, a pin, a circuit, or the like.

The chip system may be a system on chip (system on chip, SoC), or may be a baseband chip, or the like. The baseband chip may include a processor, a channel encoder, a digital signal processor, a modem, an interface module, and the like.

In an implementation, the chip or the chip system described in this application further includes at least one memory, and the at least one memory stores instructions. The memory may be a storage unit inside the chip, for example, a register or a cache, or may be a storage unit (for example, a read-only memory or a random access memory) of the chip.

All or some of the technical solutions provided in this application may be implemented by using software, hardware, firmware, or any combination thereof. When software is used to implement the embodiments, all or some of the embodiments may be implemented in a form of a computer program product. The computer program product includes one or more computer instructions. When the computer program instructions are loaded and executed on the computer, the procedure or functions according to this application are all or partially generated. The computer may be a general-purpose computer, a dedicated computer, a computer network, a network device, a terminal device, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible to the computer, or a data storage device, for example, a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium, or the like.

In this application, without a logical contradiction, mutual reference can be made between embodiments. For example, mutual reference can be made between methods and/or terms in method embodiments, mutual reference can be made between functions and/or terms in apparatus embodiments, and mutual reference can be made between functions and/or terms in the apparatus embodiments and the method embodiments.

It is clearly that, a person skilled in the art can make various modifications and variations to this application without departing from the scope of this application. This application is intended to cover these modifications and variations of this application provided that they fall within the scope of protection defined by the following claims and their equivalent technologies.

## Claims

1. A method for configuring an antenna, applied to an access network device, wherein the access network device comprises a first center frequency and a second center frequency; and the method comprises:

    receiving first measurement data from a terminal device; and
    adjusting a parameter of the antenna from a first antenna parameter combination to a second antenna parameter combination based on the first measurement data, wherein
    the first antenna parameter combination comprises a first antenna parameter of the first center frequency and a first antenna parameter of the second center frequency, and the second antenna parameter combination comprises a second antenna parameter of the first center frequency and a second antenna parameter of the second center frequency.

2. The method according to claim 1, wherein the adjusting a parameter of the antenna from a first antenna parameter combination to a second antenna parameter combination based on the first measurement data comprises:

    determining a first utility indicator corresponding to the first measurement data; and
    determining the second antenna parameter combination based on the first utility indicator.

3. The method according to claim 1 or 2, wherein the receiving first measurement data from a terminal device comprises: receiving X groups of measurement data from the terminal device, wherein any one of the X groups of measurement data comprises measurement data of the first center frequency and measurement data of the second center frequency, the X groups of measurement data comprise the first measurement data, and X is a positive integer.

4. The method according to any one of claims 1 to 3, wherein the measurement data comprises a signal-to-noise ratio or reference signal received power.

5. The method according to claim 3, wherein the adjusting a parameter of the antenna from a first antenna parameter combination to a second antenna parameter combination based on the first measurement data comprises:

determining X utility indicators based on the X groups of measurement data, wherein each of the X groups of measurement data corresponds to one utility indicator; and
determining, based on a service feature, an antenna parameter combination corresponding to a largest value of utility indicators matching the service feature as the second antenna parameter combination.

6. The method according to claim 5, wherein the service feature comprises one or more of the following: a service time period, user location distribution, and measurement feedback distribution;

the user location distribution comprises a direction angle range of the terminal device; and
the measurement feedback distribution comprises a channel quality indicator level and/or a reference signal received power level.

7. The method according to claim 6, wherein the user location distribution in the service feature is user location distribution in a time period before a current time period; or
the user location distribution is obtained through prediction based on user location distribution in a time period before a current time period.

8. The method according to claim 6 or 7, wherein when the service feature comprises the service time period, the X utility indicators of the service feature comprise one or more of the following: statistical distribution eigenvalues of X channel quality indicator levels in the service time period, statistical distribution eigenvalues of X reference signal received power levels in the service time period, and statistical distribution eigenvalues of X direction angle ranges in the service time period.

9. The method according to claim 6 or 7, wherein when the service feature comprises the user location distribution, the X utility indicators of the service feature comprise one or more of the following: statistical distribution eigenvalues of X channel quality indicator levels for the user location distribution, or statistical distribution eigenvalues of X reference signal received power levels for the user location distribution.

10. The method according to claim 6 or 7, wherein when the service feature comprises the measurement feedback distribution, the X utility indicators of the service feature comprise statistical distribution eigenvalues of X direction angle ranges for the measurement feedback distribution.

11. The method according to any one of claims 1 to 10, wherein before the receiving first measurement data from a terminal device, the method further comprises:
configuring the first antenna parameter combination as the parameter of the antenna, wherein the first antenna parameter combination is an initial default value.

12. The method according to any one of claims 1 to 11, wherein the antenna parameter comprises one or more of the following: a horizontal direction angle, a vertical direction angle, a horizontal beam width, and a vertical beam width.

13. An apparatus for configuring an antenna, wherein the apparatus for configuring the antenna is an apparatus in an access network device, and the access network device comprises a first center frequency and a second center frequency; and the apparatus for configuring the antenna comprises:

a communication unit, configured to receive first measurement data from a terminal device; and
a processing unit, configured to adjust a parameter of the antenna from a first antenna parameter combination to a second antenna parameter combination based on the first measurement data, wherein
the first antenna parameter combination comprises a first antenna parameter of the first center frequency and a first antenna parameter of the second center frequency, and the second antenna parameter combination comprises a second antenna parameter of the first center frequency and a second antenna parameter of the second center frequency.

14. The apparatus according to claim 13, wherein that the processing unit is configured to adjust the parameter of the antenna from the first antenna parameter combination to the second antenna parameter combination based on the first measurement data comprises:

> determining a first utility indicator corresponding to the first measurement data; and
> determining the second antenna parameter combination based on the first utility indicator.

15. The apparatus according to claim 13 or 14, wherein that the communication unit is configured to receive the first measurement data from the terminal device comprises:
receiving X groups of measurement data from the terminal device, wherein any one of the X groups of measurement data comprises measurement data of the first center frequency and measurement data of the second center frequency, the X groups of measurement data comprise the first measurement data, and X is a positive integer.

16. The apparatus according to any one of claims 13 to 15, wherein the measurement data comprises a signal-to-noise ratio or reference signal received power.

17. The apparatus according to claim 15, wherein that the processing unit is configured to adjust the parameter of the antenna from the first antenna parameter combination to the second antenna parameter combination based on the first measurement data comprises:

> determining X utility indicators based on the X groups of measurement data, wherein each of the X groups of measurement data corresponds to one utility indicator; and
> determining, based on a service feature, an antenna parameter combination corresponding to a largest value of utility indicators matching the service feature as the second antenna parameter combination.

18. The apparatus according to claim 17, wherein the service feature comprises one or more of the following: a service time period, user location distribution, and measurement feedback distribution;

> the user location distribution comprises a direction angle range of the terminal device; and
> the measurement feedback distribution comprises a channel quality indicator level and/or a reference signal received power level.

19. The apparatus according to claim 18, wherein the user location distribution in the service feature is user location distribution in a time period before a current time period; or
the user location distribution is obtained through prediction based on user location distribution in a time period before a current time period.

20. The apparatus according to claim 18 or 19, wherein when the service feature comprises the service time period, the X utility indicators of the service feature comprise one or more of the following: statistical distribution eigenvalues of X channel quality indicator levels in the service time period, statistical distribution eigenvalues of X reference signal received power levels in the service time period, and statistical distribution eigenvalues of X direction angle ranges in the service time period.

21. The apparatus according to claim 18 or 19, wherein when the service feature comprises the user location distribution, the X utility indicators of the service feature comprise one or more of the following: statistical distribution eigenvalues of X channel quality indicator levels for the user location distribution, or statistical distribution eigenvalues of X reference signal received power levels for the user location distribution.

22. The apparatus according to claim 18 or 19, wherein when the service feature comprises the measurement feedback distribution, the X utility indicators of the service feature comprise statistical distribution eigenvalues of X direction angle ranges for the measurement feedback distribution.

23. The apparatus according to any one of claims 13 to 22, wherein the processing unit is further configured to:
configure the first antenna parameter combination as the parameter of the antenna, wherein the first antenna parameter combination is an initial default value.

24. The apparatus according to any one of claims 13 to 23, wherein the antenna parameter comprises one or more of the following: a horizontal direction angle, a vertical direction angle, a horizontal beam width, and a vertical beam width.

25. An access network device, comprising a processor, wherein the processor is coupled to a memory, the memory is configured to store instructions, and when the instructions are executed by the processor, the method according to any one of claims 1 to 12 is performed.

26. A chip, comprising a processor and an interface, wherein
the processor is configured to read instructions to perform the method according to any one of claims 1 to 12.

27. A computer-readable storage medium, wherein the computer-readable storage medium stores instructions; and when the instructions are run on a computer, the computer is enabled to perform the method according to any one of claims 1 to 12.

28. A computer program product, wherein the computer program product comprises instructions, and when the instructions are run on a computer, the computer is enabled to perform the method according to any one of claims 1 to 12.

Access network device    Terminal device

FIG. 1

Second cell
Third cell
First cell
Second center frequency
First center frequency
Access network device
First coverage area
Second coverage area

FIG. 2

| | S101 |
|---|---|
| An access network device receives first measurement data from a terminal device | |

| | S102 |
|---|---|
| The access network device adjusts a parameter of an antenna from a first antenna parameter combination to a second antenna parameter combination based on the first measurement data | |

FIG. 3

An access network device determines a first utility indicator corresponding to first measurement data

S102a

The access network device determines a second antenna parameter combination based on the first utility indicator

S102b

FIG. 4

An access network device determines X utility indicators based on X groups of measurement data, where each of the X groups of measurement data corresponds to one utility indicator

S102_1

The access network device determines, based on a service feature, an antenna parameter combination corresponding to a largest value of utility indicators matching the service feature as a second antenna parameter combination

S102_2

FIG. 5

600

601

602

Communication unit — Processing unit

FIG. 6

700

701

Communication
interface

704

703

Memory

702

Processor

FIG. 7

## INTERNATIONAL SEARCH REPORT

| International application No. |
|---|
| **PCT/CN2023/117750** |

### A. CLASSIFICATION OF SUBJECT MATTER

H04W24/02(2009.01)i

According to International Patent Classification (IPC) or to both national classification and IPC

### B. FIELDS SEARCHED

Minimum documentation searched (classification system followed by classification symbols)

IPC:H04W,H04B

Documentation searched other than minimum documentation to the extent that such documents are included in the fields searched

Electronic data base consulted during the international search (name of data base and, where practicable, search terms used)

CNTXT, ENTXTC, DWPI, CNKI: 多频, 异构, 天线, 波束, 参数, 垂直, 水平, 角度, 宽度, 方向, 调整, 改变, 更改, 更新, 重选, 选择, 频点, 载波, 频段, multi-frequency, heterogeneity, antenna, beam, parameter, vertical, horizontal, angle, width, direction, adjust, change, update, reselect, select, carrier, frequency, band, point

### C. DOCUMENTS CONSIDERED TO BE RELEVANT

| Category* | Citation of document, with indication, where appropriate, of the relevant passages | Relevant to claim No. |
|---|---|---|
| X | KR 20210048815 A (KT CORP.) 04 May 2021 (2021-05-04) description, paragraphs 0043 and 0056-0118 | 1-28 |
| A | CN 112929907 A (CHINA UNITED NETWORK COMMUNICATIONS GROUP CO., LTD.) 08 June 2021 (2021-06-08) entire document | 1-28 |
| A | CN 112469060 A (CHINA UNITED NETWORK COMMUNICATIONS GROUP CO., LTD.) 09 March 2021 (2021-03-09) entire document | 1-28 |
| A | CN 109474299 A (VIVO MOBILE COMMUNICATION CO., LTD.) 15 March 2019 (2019-03-15) entire document | 1-28 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **16 November 2023** | **22 November 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

| International application No. |
| --- |
| **PCT/CN2023/117750** |

| Patent document cited in search report | | | Publication date (day/month/year) | Patent family member(s) | Publication date (day/month/year) |
| --- | --- | --- | --- | --- | --- |
| KR | 20210048815 | A | 04 May 2021 | None | |
| CN | 112929907 | A | 08 June 2021 | None | |
| CN | 112469060 | A | 09 March 2021 | None | |
| CN | 109474299 | A | 15 March 2019 | None | |

Form PCT/ISA/210 (patent family annex) (July 2022)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211215342